# EUROPEAN PATENT APPLICATION

(11) **EP 4 593 373 A1**
(43) Date of publication of application: **30.07.2025**
(21) Application number: 23869907.8
(22) Date of filing: 11.07.2023
(51) Int. Cl.: H04N 13/106

(54) **IMAGE PROCESSOR, IMAGE PROCESSING METHOD, STORAGE MEDIUM, AND EXTENDED REALITY DISPLAY APPARATUS**

(30) Priority: 27.09.2022 CN 202211184496
(71) Applicant: GravityXR Electronics and Technology Co., Ltd., Ningbo, Zhejiang 315200 (CN)
(72) Inventor: JIA, Tao, Ningbo, Zhejiang 315200 (CN); WANG, Chaohao, Ningbo, Zhejiang 315200 (CN); ZHAO, Lei, Ningbo, Zhejiang 315200 (CN)
(74) Representative: Nederlandsch Octrooibureau
(86) International application number: PCT/CN2023/106703
(87) International publication number: WO 2024/066660

(57) **Abstract**

The disclosure provides an image processor, an image processing method, a computer-readable storage media and an extended reality display device. The image processor comprises a display pipeline. The display pipeline integrates a software processing unit and at least one hardware image processing unit, and is configured to: obtaining an eye movement signal and motion perception information of a user, and obtaining a virtual rendering image to be processed; using a first software configured in the software processing unit and the at least one hardware image processing unit to perform optical correction on the virtual rendering image, according to the eye movement signal and the motion perception information; and using a second software configured in the software processing unit and the at least one hardware image processing unit to perform display compensation correction on the virtual rendering image, according to the eye movement signal and the motion perception information.

## Description

This application claims the priority of a patent application with a filing date of September 27, 2022, a Chinese application number of 202211184496.3, and a title of "Image processor, processing method, storage medium, and extended reality display device".

### Technical Field

The disclosure relates to extended reality display technology, in particular to an image processor, an image processing method, a computer-readable storage medium and an extended reality display device.

### Background

Extended reality (XR) display technology refers to the technology that combines reality and virtuality through computers to create a human-computer interactive virtual environment, including but not limited to augmented reality (AR) display technology, virtual reality (VR) display technology, and mixed reality (MR) display technology. By integrating these three visual interaction technologies, the extended reality display technology can provide users with immersive experiences of seamless transition between the virtual world and the real world.

For the demands of the image compensation and correction in the XR field, existing display compensation algorithms is usually insufficient to support complex and delicate compensation, and the compensation effect is limited. In order to overcome the above-mentioned shortcoming of existing technologies, this field urgently needs an image processing technology that combines an eye movement signal and motion perception information of a user to perform optical correction and display compensation correction, and by setting and reusing hardware image processing unit to improve the storage, processing and transmission efficiency of data, thereby enhancing the image display quality of XR display device based on limited software and hardware resources.

### Summary

A brief overview of one or more aspects is provided below to provide a basic understanding of these aspects. The summary is not an extensive overview of all of the aspects that are contemplated, and is not intended to identify key or decisive elements in all aspects. The sole purpose of the summary is to present some concepts of one or more aspects in a simplified form as a prelude to the more detailed description that is presented later.

In order to overcome the above-mentioned shortcomings of existing technologies, the disclosure provides an image processor, an image processing method, a computer-readable storage medium and an extended reality display device, which can combine an eye movement signal and motion perception information of a user to perform optical correction and display compensation correction, and by setting and reusing hardware image processing unit to improve the storage, processing, and transmission efficiency of data, thereby enhancing the image display quality of XR display device based on limited software and hardware resources.

Specifically, the image processor provided in the first aspect of the disclosure comprises a display pipeline, wherein the display pipeline integrates a software processing unit and at least one hardware image processing unit, and is configured to: obtaining an eye movement signal and motion perception information of a user, and obtaining a virtual rendering image to be processed; using a first software configured in the software processing unit and the at least one hardware image processing unit to perform optical correction on the virtual rendering image, according to the eye movement signal and the motion perception information; and using a second software configured in the software processing unit and the at least one hardware image processing unit to perform display compensation correction on the virtual rendering image, according to the eye movement signal and the motion perception information.

Furthermore, in some embodiments of the disclosure, the at least one hardware image processing unit comprises a first memory. The first memory is used to store pixel data at multiple positions of a current frame and/or pixel data at multiple positions of at least one historical frame. Steps to perform the optical correction and/or the display compensation correction on the virtual rendering image comprise: obtaining the pixel data at multiple positions of the current frame and/or the pixel data at multiple positions of the at least one historical frame from the first memory; and using the first software to perform the optical correction on the virtual rendering image, and/or using the second software to perform the display compensation correction on the virtual rendering image, according to the eye movement signal, the motion perception information, and the pixel data at multiple positions of the current frame and/or the pixel data at multiple positions of the at least one historical frame.

Furthermore, in some embodiments of the disclosure, the at least one hardware image processing unit further comprises at least one hardening calculation circuit. Steps to perform the optical correction and/or the display compensation correction on the virtual rendering image further comprise: using the first software and the at least one hardening calculation circuit to perform the optical correction on the virtual rendering image, according to the eye movement signal, the motion perception information, and the pixel data at multiple positions of the current frame and/or the pixel data at multiple positions of the at least one historical frame; and/or using the second software and the at least one hardening calculation circuit to perform the display compensation correction on the virtual rendering image, according to the eye movement signal, the motion perception information, and the pixel data at multiple positions of the current frame and/or the pixel data at multiple positions of the at least one historical frame.

Furthermore, in some embodiments of the disclosure, steps of using the second software and the at least one hardening calculation circuit to perform the display compensation correction on the virtual rendering image, according to the eye movement signal, the motion perception information, and the pixel data at multiple positions of the current frame and/or the pixel data at multiple positions of the at least one historical frame comprises: determining a target pixel point according to the eye movement signal and the motion perception information; obtaining raw data of the target pixel point and at least one related pixel point from the first memory; using the at least one hardening calculation circuit to perform hardening calculation on the raw data of the target pixel point and the at least one related pixel point; and using the second software to perform the display compensation correction, including distortion correction, uniformity correction, color separation removal and/or color accuracy compensation, on the virtual rendering image, according to a result of the hardening calculation.

Furthermore, in some embodiments of the disclosure, the at least one hardware image processing unit further comprises a second memory. The second memory is used to store calibration data of an optical module, a display panel and/or a camera. Steps to perform the optical correction on the virtual rendering image further comprises: obtaining the calibration data from the second memory, and using the first software and at the least one hardening calculation circuit to perform lens optical correction on the virtual rendering image according to the calibration data, and/or steps to perform the display compensation correction on the virtual rendering image comprises: obtaining the calibration data from the second memory, and using the second software and the at least one hardening calculation circuit to perform screen display compensation correction on the virtual rendering image according to the calibration data.

Furthermore, in some embodiments of the disclosure, steps to perform the display compensation correction on the virtual rendering image comprise: obtaining a real scene image to be processed; using a third software configured in the software processing unit and the at least one hardware image processing unit, to perform layer mixing on the virtual rendering image that has undergone the optical correction and the real scene image, according to the eye movement signal and the motion perception information, to obtain a mixed reality image; and using the second software and the at least one hardware image processing unit to perform the display compensation correction on the mixed reality image, according to the eye movement signal and the motion perception information.

Furthermore, in some embodiments of the disclosure, the step of using a third software configured in the software processing unit and the at least one hardware image processing unit, to perform layer mixing on the virtual rendering image that has undergone the optical correction and the real scene image, according to the eye movement signal and the motion perception information, to obtain a mixed reality image comprises: obtaining interaction information between the real scene image and the virtual rendering image; using the third software and the at least one hardware image processing unit to perform the layer mixing on the virtual rendering image that has undergone the optical correction and the real scene image, according to the eye movement signal, the motion perception information and the interaction information.

Furthermore, in some embodiments of the disclosure, the display pipeline is further configured to: using a fourth software configured in the software processing unit and the at least one hardware image processing unit, to perform color enhancement on the virtual rendering image that has undergone the optical correction, or the mixed reality image, according to the eye movement signal and the motion perception information, to obtain a color enhanced image; and using the second software and the at least one hardware image processing unit to perform the display compensation correction on the color enhanced image, according to the eye movement signal and the motion perception information.

Furthermore, in some embodiments of the disclosure, the at least one hardware image processing unit further comprises a hardening calculation circuit, including at least one of a weighted sum circuit, a mean calculation circuit, a filtering circuit and a mapping circuit for pixel position relationship. The display pipeline is further configured to: using a fifth software configured in the software processing unit and the at least one hardware image processing unit, to perform spatial distortion correction on the virtual rendering image, according to the eye movement signal; and/or using a sixth software configured in the software processing unit and the at least one hardware image processing unit to perform composite compression processing on the virtual rendering image, according to the eye movement signal.

In addition, the image processing method provided according to the second aspect of the disclosure comprises following steps: obtaining an eye movement signal and motion perception information of a user, and obtaining a virtual rendering image to be processed; using a first software configured in a software processing unit and at least one hardware image processing unit to perform optical correction on the virtual rendering image, according to the eye movement signal and the motion perception information; and using a second software configured in the software processing unit and the at least one hardware image processing unit to perform display compensation correction on the virtual rendering image, according to the eye movement signal and the motion perception information.

In addition, the computer-readable storage media provided according to the third aspect of the disclosure stores a computer instruction thereon. The image processing method provided according to the second aspect of the disclosure is implemented when the computer instruction is executed by a processor.

In addition, the extended reality display device provided according to the forth aspect of the disclosure comprises an eye tracker, a motion sensor, a main processor, an image processor and a display terminal. The eye tracker is used to collect an eye movement signal of a user. The motion sensor is used to collect motion perception information of the user. The main processor is used to output a virtual rendering image to be processed. The coprocessor can use the image processor provided according to the first aspect of the disclosure, wherein the image processor is respectively connected to the eye tracker, the motion sensor and the main processor to obtain the eye movement signal, the motion perception information and the virtual rendering image. The display terminal is connected to the image processor to obtain and display a corrected image that has undergone optical correction and display compensation correction performed by the image processor.

Furthermore, in some embodiments of the disclosure, the extended reality display device further comprises a camera, wherein the image processor is further connected to the camera, and configured to: obtaining a real scene image to be processed through the camera; using a software processing unit and at least one hardware image processing unit configured in the image processor, to perform layer mixing on the virtual rendering image that has undergone the optical correction and the real scene image, according to the eye movement signal and the motion perception information, to obtain a mixed reality image; and using the software processing unit and the at least one hardware image processing unit to perform display compensation correction on the mixed reality image, according to the eye movement signal and the motion perception information.

### Brief Description of the Drawings

The above features and advantages of the disclosure will be better understood after reading the detailed description of the embodiments of the present disclosure in conjunction with the following figures. In the figures, components are not necessarily drawn to scale, and components having similar related features may have the same or similar reference numerals.
Fig. 1 shows a schematic diagram of the extended reality display device provided according to some embodiments of the disclosure.
Fig. 2 shows a flowchart of the image processing method provided according to some embodiments of the disclosure.
Fig. 3 shows a schematic diagram of frame by frame image correction processing provided according to some embodiments of the disclosure.
Fig. 4 shows a schematic diagram of distortion correction provided according to some embodiments of the disclosure.
Fig. 5 shows a schematic diagram of uniformity correction provided according to some embodiments of the disclosure.
Fig. 6 shows a schematic diagram of color separation correction provided according to some embodiments of the disclosure.
Fig. 7 shows a schematic diagram of color accuracy compensation correction provided according to some embodiments of the disclosure.
Fig. 8 shows a schematic diagram of device by device image correction processing provided according to some embodiments of the disclosure.

### Detailed Description of Embodiments

The embodiments of the disclosure are described in the following detailed description. Other advantages and effects of the disclosure will be readily apparent to those skilled in the art from this disclosure. Although the description of the disclosure will be described in conjunction with the preferred embodiments, this is not a limitation of the disclosure. On the contrary, the invention is described in connection with the embodiments so as to cover other alternatives or modifications that are possible in the embodiments of the disclosure. In order to provide a thorough understanding of the disclosure, many specific details are included in the following description. The disclosure may also be practiced without these details. In addition, some specific details are omitted in the description in order to avoid confusing or obscuring the disclosure.

In the description of the disclosure, it should be noted that the terms "installation", "connecting", and "connected" should be understood broadly unless explicitly stated and defined otherwise. For example, the terms "installation", "connecting", and "connected" may be either a fixed connection, a detachable connection, or an integral connection; the terms may be either a mechanical connection or an electrical connection; the terms also may be either a direct connection, an indirect connection through an intermediate medium, or an internal connection between two components. The specific meaning of the above terms in the disclosure can be understood in a specific case by those skilled in the art.

In addition, "up", "down", "left", "right", "top", "bottom", "horizontal", "vertical" used in the following description shall be understood as the orientation described in the paragraph and shown in the related figure. The relative term is used for convenience of description only, and does not mean that the device described therein is to be manufactured or operated in the specific orientation, and therefore should not be construed as limiting the disclosure.

Understandably, although the terms "first", "second", "third", etc. may be used to describe various components, regions, layers and/or portions to distinguish different components, regions, layers and/or portions, the order of these components, regions, layers and/or portions described above should not be limited by the terms. Therefore, a first component, region, layer and/or portion mentioned below may be also mentioned as a second component, region, layer and/or portion without departing from some embodiments of the disclosure.

As mentioned above, for the demands of image compensation and correction in the XR field, existing display compensation algorithms are generally implemented in hardware modules on the display driver IC (DDIC) at screen end, while most existing optical compensation algorithms are generally implemented in software on the graphics processing unit (GPU). However, in display algorithms implemented through DDIC hardware, existing technologies is usually insufficient to support complex and delicate compensation due to limitations in manufacturing process and hardware resources of DDIC, and the compensation effect is limited. In optical distortion compensation schemes implemented through GPU software, there are drawbacks of high power consumption and high latency. In addition, there are several new display defects that require compensation algorithms to be designed in the combination of Micro OLED display devices and pancake lens optical devices in XR display devices, as well as in the combination of LCD displays and pancake lens optical devices in 0D/1D/2D backlight modules.

In order to overcome the above-mentioned shortcomings of existing technologies, the disclosure provides an image processor, an image processing method, a computer-readable storage medium and an extended reality display device, which can combine an eye movement signal and motion perception information of a user to perform optical correction and display compensation correction, and by setting and reusing hardware image processing units to improve the storage, processing, and transmission efficiency of data, thereby enhancing the image display quality of XR display devices based on limited software and hardware resources.

In some non-limiting embodiments, the image processing method provided in the second aspect of the disclosure can be implemented by the image processor provided in the first aspect of the disclosure. Specifically, the image processor can be independently configured in the form of a chip of a coprocessor in the extended reality display device provided in the forth aspect of the disclosure, and also can be integrated into the main processor such as the Central Processing Unit (CPU) and the Graphics Processing Unit (GPU) of the extended reality display device provided in the forth aspect of the disclosure through software programs and hardware units.

Furthermore, the image processor provided in the first aspect of the disclosure can be configured or connected a processing unit and a storage unit of software programs. The storage unit includes, but not limited to, the computer-readable storage medium provided in the third aspect of the disclosure, on which computer instructions are stored. The processing unit is connected to the storage unit and configured to execute the computer instructions stored on the storage unit to implement the above image processing method provided in the second aspect of the disclosure.

The working principle of the above image processor and the extended reality display device will be described below in conjunction with some embodiments of some image processing methods. In some non-limiting embodiments, the extended reality display device can use a system architecture of a coprocessor. Those skilled in the art can understand that the embodiments of these image processing methods only provide some non-limiting implementations of the disclosure, which is intended to clearly display the main idea of the disclosure, and provide some specific proposals that are convenient for the public to implement, rather than limiting all working manners or all functions of the image processing system and the extended reality display device. Similarly, the image processor and the extended reality display device is also only a non-limiting embodiment provided by the disclosure, and does not limit the implementation subject to each step in these image processing methods.

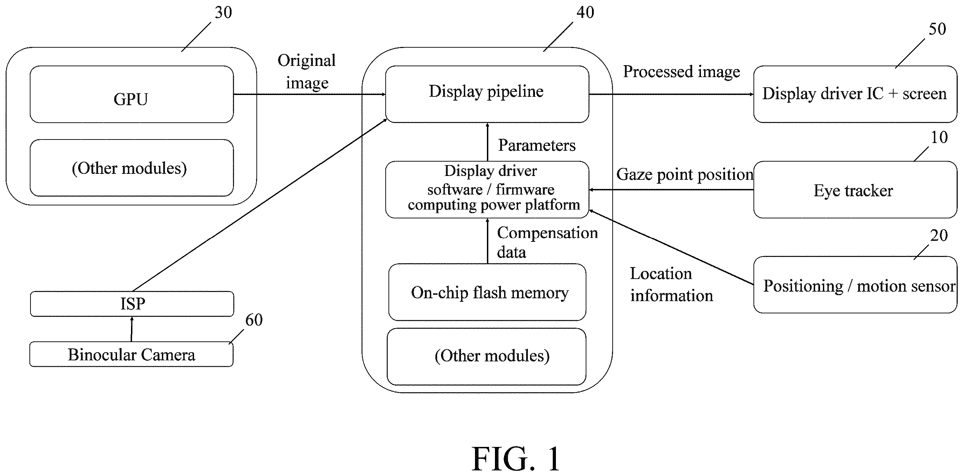

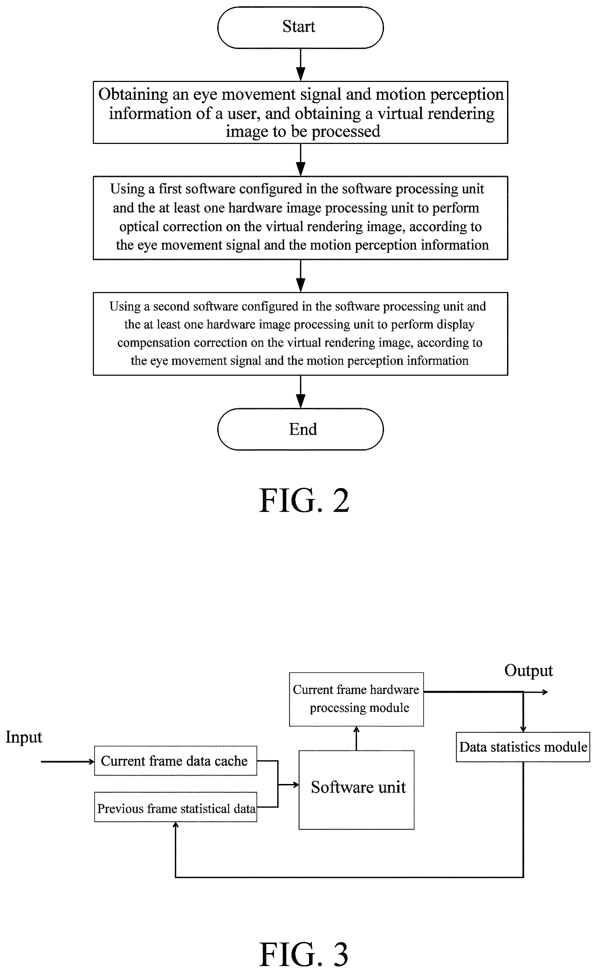

Please refer to Fig. 1 and Fig. 2. Fig. 1 shows a schematic diagram of the extended reality display device provided according to some embodiments of the disclosure. Fig. 2 shows a flowchart of the image processing method provided according to some embodiments of the disclosure.

As shown in Fig. 1, in some embodiments of the disclosure, the extended reality display device can be configured with an eye tracker 10, a motion sensor 20, a main processor 30, a coprocessor 40 and a display terminal 50. The eye tracker 10 is used to collect an eye movement signal of a user. The motion sensor 20 is used to collect motion perception information of the user. The main processor 30 is used to output a virtual rendering image to be processed. The coprocessor 40 can use the image processor provided in the first aspect of the disclosure. The coprocessor 40 is respectively connected to the eye tracker 10, the motion sensor 20 and the main processor 30 to obtain the eye movement signal, the motion perception information and the virtual rendering image. The display terminal 50 is connected to the coprocessor 40 to obtain and display a corrected image that has undergone optical correction and display compensation correction performed by the coprocessor 40.

Furthermore, the coprocessor 40 can be configured with a display pipeline. The display pipeline integrates a software processing unit and at least one hardware image processing unit, and is configured to use different software programs and the same hardware image processing unit to perform image processing processes such as optical correction and display compensation correction on the virtual rendering image, thereby improving the storage, processing, and transmission efficiency of data, thereby enhancing the image display quality of XR display devices based on limited software and hardware resources.

Specifically, the software processing unit configured in the display pipeline of the coprocessor 40 include but are not limited to optical correction unit and display compensation correction unit. The hardware image processing unit configured in the display pipeline can be selected from at least one of a transistor level cache memory, a weighted sum circuit, a mean calculation circuit, a filtering circuit, and a mapping circuit for pixel position relationship, used to store pixel data at multiple positions of a current frame and/or pixel data at multiple positions of at least one historical frame, and/or perform hardening calculation of weighted sum, mean calculation, filtering, and/or pixel position mapping on these pixel data.

As shown in Fig. 2, during the process of image processing, the display pipeline can firstly obtain an eye movement signal and motion perception information of a user, and a virtual rendering image to be processed.

Herein, the eye movement signal includes but not limited to eye deviation angle, gaze position, gaze direction, and other data of the user. The display pipeline can be directly connected to the eye tracker 10 and obtain the eye movement signal directly from the eye tracker 10, or indirectly connected to the eye tracker 10 through the GPU or other image processing units of the main processor 30, and indirectly synchronously obtain the eye movement signal of the user through the main processor 30. In some embodiments, the coprocessor 40 can be preferably configured with display driver software and/or firmware computing power platform. The display driver software and/or the firmware computing power platform are respectively connected to the eye tracker 10, the motion sensor 20, and the display pipeline. In the process of obtaining the eye movement signal of the user, the coprocessor 40 can firstly obtain the eye movement signal of the user from the eye tracker 10 through the display driver software and/or the firmware computing power platform, and perform eye tracking calculation to determine the gaze point position. Afterwards, the display driver software and/or the firmware computing platform can update the internal gaze point information of the system according to the gaze point position to construct an updated compression model, and transmit compression parameters of the updated compression model to the display pipeline for subsequent image processing.

In addition, the above motion perception information can be selected from X/Y/Z three degrees of freedom information of a head of the user and corresponding calculated yaw, pitch, and roll information, or six degrees of freedom information of the head of the user, including front/back, up/down, left/right, yaw, pitch, and roll. The virtual rendering image can be the original image generated by the GPU or other image processing units of the main processor 30. In some embodiments, the main processor 30 may also be preferably connected to the eye tracker 10, configured to obtain the eye movement signal of the user from the eye tracker 10, and firstly perform gaze point rendering compression on the generated original virtual rendering image according to the eye movement signal, and then send the compressed gaze point rendering image to the coprocessor 40 to reduce the data transmission and processing load of the entire architecture.

As shown in Fig. 1 and Fig. 2, after obtaining the eye movement signal and the motion perception information of the user, and obtaining the virtual rendering image to be processed, the display pipeline can use the optical correction unit (i.e. the first software) configured therein, as well as at least one the hardware image processing unit integrated therein, to perform optical correction on the obtained virtual rendering image.

Specifically, the at least one hardware image processing unit comprises a first memory. The first memory can store pixel data at multiple positions of a current frame and/or pixel data at multiple positions of at least one historical frame. As shown in Fig. 3, during the process of performing optical correction, the optical correction unit (i.e. the first software) configured in the display pipeline can firstly determine a target pixel point corresponding to the gaze point and at least one related pixel point according to the eye movement signal and the motion perception information of the user, and then obtain the pixel data at multiple corresponding positions of the current frame and/or the pixel data at multiple corresponding positions of the at least one historical frame from the first memory. Afterwards, the optical correction unit (i.e. the first software) can perform the optical correction on the virtual rendering image, according to the obtained eye movement signal, the motion perception information, and the pixel data at multiple positions of the current frame and/or the pixel data at multiple positions of the at least one historical frame.

Furthermore, the at least one hardware image processing unit further comprises at least one hardening calculation circuit. The at least one hardening calculation circuit is selected from at least one of a weighted sum circuit, a mean calculation circuit, a filtering circuit, and a mapping circuit for pixel position relationship. During the process of preforming the optical correction on the virtual rendering image, the display pipeline can use the first software and the at least one hardening calculation circuit to perform the optical correction on the virtual rendering image according to the eye movement signal, the motion perception information, and the pixel data at multiple positions of the current frame and/or the pixel data at multiple positions of the at least one historical frame.

For example, the display pipeline can firstly input raw data of the target pixel point and the at least one related pixel point (i.e. the pixel data at multiple positions of the current frame and/or the pixel data at multiple positions of the at least one historical frame) into the at least one hardening calculation circuit, such as the weighted sum circuit, the mean calculation circuit, the filtering circuit, and the mapping circuit for pixel position relationship, to perform hardening calculation to obtain a corresponding result of the hardening calculation. Then, the first software can be used to perform the optical correction on the virtual rendering image according to the result of the hardening calculation.

In this way, the disclosure can reuse a large amount of pixel data at multiple positions of multiple frames of images through the first memory during the frame by frame optical correction, greatly reducing the demand for hardware storage resources and eliminating the demands for repeated calculation and storing of pixel data in the image, thereby enhancing the image display quality of XR display devices based on limited software and hardware resources.

In addition, as shown in Fig. 1 and Fig. 2, after obtaining the eye movement signal and the motion perception information of the user, and obtaining the virtual rendering image to be processed, the display pipeline can also use the display compensation correction unit (i.e. the second software) configured therein, as well as the at least one hardware image processing unit integrated therein, to perform display compensation correction on the obtained virtual rendering image.

As mentioned above, the at least one hardware image processing unit comprises the first memory. The first memory can store pixel data at multiple positions of a current frame and/or pixel data at multiple positions of at least one historical frame. As shown in Fig. 3, during the process of performing display compensation correction, the display compensation correction unit (i.e. the second software) configured in the display pipeline can also determine the target pixel point corresponding to the gaze point and the at least one related pixel point according to the eye movement signal and the motion perception information of the user, and then obtain the pixel data at multiple positions of the current frame and/or the pixel data at multiple positions of the at least one historical frame from the first memory. Afterwards, the display compensation correction unit (i.e. the second software) can perform the display compensation correction on the virtual rendering image according to the eye movement signal, the motion perception information, and the pixel data at multiple positions of the current frame and/or the pixel data at multiple positions of the at least one historical frame.

Furthermore, the at least one hardware image processing unit also comprises the at least one hardening calculation circuit, such as the weighted sum circuit, the mean calculation circuit, the filtering circuit, and the mapping circuit for pixel position relationship mentioned above. During the process of performing display compensation correction on the virtual rendering image, the display pipeline can use the second software and the at least one hardening calculation circuit to perform the display compensation correction on the virtual rendering image according to the eye movement signal, the motion perception information, the pixel data at multiple positions of the current frame and/or the pixel data at multiple positions of the at least one historical frame.

For example, the display pipeline can firstly input the raw data of the target pixel point and the at least one related pixel point (i.e. the pixel data at multiple positions of the current frame and/or the pixel data at multiple positions of the at least one historical frame) into the at least one hardening calculation circuit, such as the weighted sum circuit, the mean calculation circuit, the filtering circuit, and the mapping circuit for pixel position relationship, to perform hardening calculation to obtain the corresponding result of the hardening calculation. Then, the second software can be used to perform the display compensation correction such as distortion removal, uniformity correction, color separation removal, and/or color accuracy compensation on the virtual rendering image according to the result of the hardening calculation.

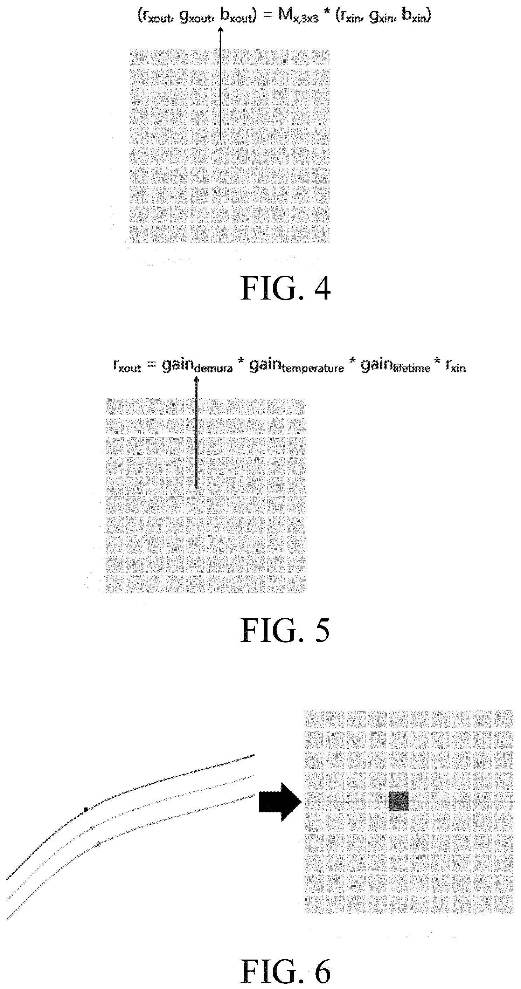

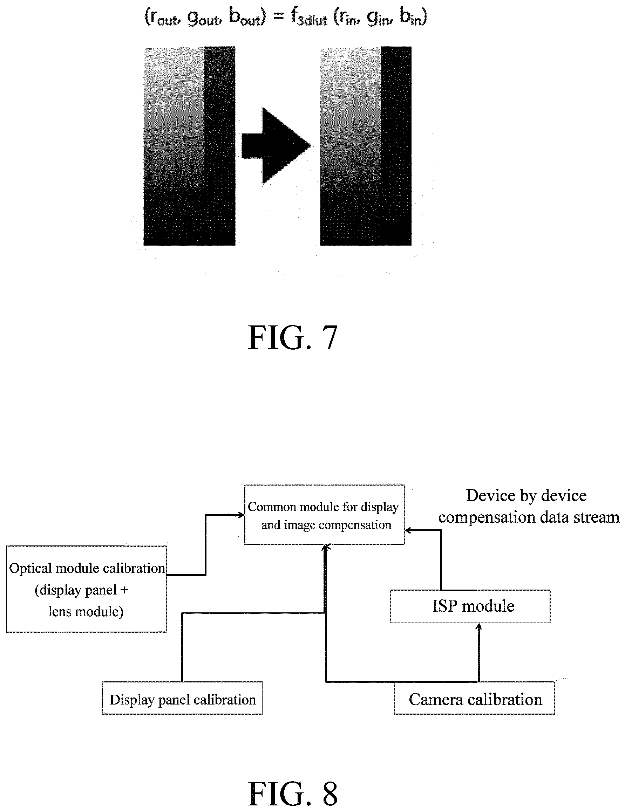

Please refer to Fig. 4 to Fig. 7 for details. Fig. 4 shows a schematic diagram of distortion correction provided according to some embodiments of the disclosure. Fig. 5 shows a schematic diagram of uniformity correction provided according to some embodiments of the disclosure. Fig. 6 shows a schematic diagram of color separation correction provided according to some embodiments of the disclosure. Fig. 7 shows a schematic diagram of color accuracy compensation correction provided according to some embodiments of the disclosure.

As shown in Fig. 4, the distortion correction is achieved based on the correspondence of pixel coordinates. Specifically, the pixel data of the target pixel (rₓₒᵤₜ, gₓₒᵤₜ, bₓₒᵤₜ) is determined according to 3×3 dimensional corresponding mapping relationship M_{x,3×3} of gaze point information, weight settings, and pixel position information (rₓᵢₙ, gₓᵢₙ, bₓᵢₙ) of the original image, mainly implemented based on pixel mapping circuit to improve image distortion and other issues.

As shown in Fig. 5, the principle of the uniformity correction is to determine the target pixel value rₓₒᵤₜ for each pixel according to the pixel position information rₓᵢₙ of the original image, and the gain coefficients related to the three dimensions of uniformity compensation gain_{demura}, temperature compensation gainₜₑₘₚₑᵣₐₜᵤᵣₑ, and lifetime compensation gain_{life}, mainly to correct uniformity of sub pixels.

As shown in Fig. 6, the color separation correction is the process of setting a weighted average coefficient for the pixel position information (rₓᵢₙ, gₓᵢₙ, bₓᵢₙ) of the original image, and performing a weighted average on data of nearby pixels of the target pixel point, in order to correspond the RGB three colors to the data of the target pixel point, mainly used to handle color separation caused by different degrees of image distortion on the RGB three colors.

As shown in Fig. 7, the color accuracy compensation correction is achieved by using a 3×3 dimensional matrix f_{3dlut} to obtain the ratio of the RGB three colors of the target pixel, and then mapping the RGB data (rₓᵢₙ, gₓᵢₙ, bₓᵢₙ) of the original image to determine the pixel data (rₓₒᵤₜ, gₓₒᵤₜ, bₓₒᵤₜ) of the target pixel, mainly used to compensate for color accuracy of display panel.

In summary, on one hand, the disclosure can reuse a large amount of pixel data at multiple positions of multiple frames of images through the first memory during the frame by frame display compensation correction process, greatly reducing the demand for hardware storage resources and eliminating the demands for repeated calculation and storing of pixel data. On the other hand, it can reuse hardware resources such as the weighted sum circuit, the mean calculation circuit, the filtering circuit, and the mapping circuit for pixel position relationship together with the optical correction to reduce the software processing load during the display compensation correction process, thereby further improving the image display quality of XR display devices based on limited software and hardware resources.

Furthermore, as shown in Fig. 1, in some embodiments of the disclosure, the extended reality display device can further preferably comprises a camera 60. Herein, the camera 60 is selected from at least one of a binocular fisheye camera, a monochrome IR camera, a structured light depth sensing camera, and a laser ToF depth sensing camera, and is connected to the coprocessor 40 via an image signal processing (ISP) module. The display pipeline configured in the coprocessor 40 can also preferably obtain a real scene image to be processed through the camera 60, and use a locally configured layer mixing unit (i.e. a third software), and at least one hardware image processing unit such as the first memory, the weighted sum circuit, the mean calculation circuit, the filtering circuit, and the mapping circuit for pixel position relationship, to perform layer mixing on the virtual rendering image that has undergone the optical correction and the real scene image, according to the eye movement signal and the motion perception information, to obtain a mixed reality image. Herein, the real scene image can be a real scene image that has undergone the optical correction by the ISP module, or it can be an original real scene image that has not undergone the optical correction. Afterwards, the display pipeline can use the software processing unit and the at least one hardware image processing unit to perform the above-mentioned display compensation correction on the mixed reality image according to the obtained eye movement signal and the motion perception information.

Furthermore, in some embodiments of the disclosure, the at least one hardware image processing unit can further preferably comprises a second memory. This second memory is used to store calibration data of an optical module (such as lens modules), a display panel, and/or a camera. As shown in Fig. 8, during the process of performing the optical correction on the virtual rendering image, the display pipeline can also obtain the calibration data of each device one by one from the second memory, and use the above optical correction unit (i.e. the first software), combined with the at least one hardware image processing unit such as the first memory, the weighted sum circuit, the mean calculation circuit, the filtering circuit, the mapping circuit for pixel position relationship, etc., to perform lens optical correction on the virtual rendering image according to the calibration data. In addition, during the process of performing the display compensation correction on the virtual rendering image, the display pipeline can also obtain the calibration data of each device one by one from the second memory, use the above display compensation correction unit (i.e. the second software), and combined with the at least one hardware image processing unit such as the first memory, the weighted sum circuit, the mean calculation circuit, the filtering circuit, and the mapping circuit for pixel position relationship to perform screen display compensation correction on the virtual rendering image according to the calibration data. In this way, the disclosure can further improve the image display quality of XR display devices based on limited software and hardware resources.

In addition, during the process of performing the display compensation correction on the mixed reality image, the display pipeline can also preferably obtain interaction information such as occlusion information and transparency of related layers between the real scene image and the virtual rendering image from the graphics processing unit (GPU) of the main processor 30. Afterwards, the display pipeline can use the above layer mixing unit (i.e. the third software) according to the eye movement signal, the motion perception information, and the interaction information, and combined with the at least one hardware image processing unit such as the first memory, the weighted sum circuit, the mean calculation circuit, the filtering circuit, and the mapping circuit for pixel position relationship to perform the layer mixing on the virtual rendering image that has undergone the optical correction and the real scene image. Then, the above display compensation correction unit (i.e. the second software) and the at least one hardware image processing unit such as the first memory, the weighted sum circuit, the mean calculation circuit, the filtering circuit, and the mapping circuit for pixel position relationship can be used to perform the display compensation correction on the mixed reality image obtained by mixing. The specific scheme of performing the display compensation correction on the mixed reality image is similar to the above embodiments and will not be repeated here.

In addition, in some embodiments of the disclosure, the display pipeline can further preferably configures a color enhancement unit (i.e. a fourth software). In the process of performing the image processing, the display pipeline can also use the color enhancement unit (i.e. the fourth software) and combined with the at least one hardware image processing unit, such as the first memory, the weighted sum circuit, the mean calculation circuit, the filtering circuit, the mapping circuit for pixel position relationship, etc., according to the obtained eye movement signal and the motion perception information, to enhance the color of the virtual rendering image that has undergone the optical correction or the mixed reality image, and then use the display compensation correction unit (i.e. the second software) and the at least one hardware image processing unit, such as the first memory, the weighted sum circuit, the mean calculation circuit, the filtering circuit, the mapping circuit for pixel position relationship, etc., to perform the display compensation correction on the obtained color enhanced image, according to the eye movement signal and the motion perception information. The specific scheme of performing the display compensation correction on the color enhanced image is similar to the above embodiments and will not be repeated here.

In addition, in some embodiments of the disclosure, the display pipeline can further preferably configures a spatial distortion correction unit (i.e. a fifth software). During the process of performing the image processing, the display pipeline can also use the spatial distortion correction unit (i.e. the fifth software) and combined with the at least one hardware image processing unit such as the first memory, the weighted sum circuit, the mean calculation circuit, the filtering circuit, and the mapping circuit for pixel position relationship to perform spatial distortion correction on the virtual rendering image, according to the obtained eye movement signal.

Specifically, during the process of performing the spatial distortion correction, in response to obtaining the virtual rendering image to be processed, the spatial distortion correction unit (i.e. the fifth software) can firstly determine the pixel data and processing parameters required for the spatial distortion correction. In some embodiments, the pixel data can be preferably determined according to the eye movement signal of the user. Afterwards, the spatial distortion correction unit (i.e. the fifth software) can obtain processing parameters from each corresponding memory, and obtain pixel cache data required for the image distortion correction processing from each corresponding first memory. Then, the processing parameters and the pixel cache data are sequentially input into one or more of the weighted sum circuit, the mean calculation circuit, the filtering circuit, and the mapping circuit for pixel position relationship mentioned above, preforming weighted sum, mean calculation, filtering, and/or pixel position mapping hardening calculation to obtain the corresponding hardening calculation result. Afterwards, the spatial distortion correction unit (i.e. the fifth software) can obtain image that have undergone the distortion correction through software operations such as data arrangement and assignment, thereby further improving the image display quality of XR display devices based on limited software and hardware resources.

In addition, in some embodiments of the disclosure, the display pipeline can further preferably configures a composite compression unit (i.e. a sixth software). In the process of performing the image processing, the display pipeline can also use the composite compression unit (i.e. the sixth software) and combined with the at least one hardware image processing unit such as the first memory, the weighted sum circuit, the mean calculation circuit, the filtering circuit, and the mapping circuit for pixel position relationship to perform composite compression processing on the virtual rendering image, according to the obtained eye movement signal.

Specifically, the composite compression can be divided into two parts of upsampling process and downsampling process. During the downsampling process, in response to obtaining the compression parameters associated with the eye movement signal of the user and the virtual rendering image to be processed from the aforementioned display driver software and/or firmware computing platform, the composite compression unit (i.e. the sixth software) can firstly divide the virtual rendering image into multiple partitions according to the gaze point position of the user according to the compression parameters of the updated compression model, and determine coordinate range of each partition and the downsampling magnification of each non attention partition far from the gaze point position. Afterwards, the composite compression unit (i.e. the sixth software) can retrieve the processing parameters for downsampling operations from the corresponding memory based on the coordinates of each pixel in each partition, and obtain the pixel cache data required for downsampling processing from the corresponding first memory. Afterwards, the composite compression unit (i.e. the sixth software) can sequentially input the obtained processing parameters and pixel cache data of each pixel into one or more of the weighted summation circuit, the mean calculation circuit, the filtering circuit, and the mapping circuit for pixel position relationship mentioned above, and perform the weighted sum, the mean calculation, the filtering, and/or the pixel position mapping hardening calculation on the pixel cache data to obtain a first hardening calculation result based on downsampling processing. Afterwards, the composite compression unit (i.e. the sixth software) can obtain the downsampled compressed image through software operations such as data arrangement and assignment.

In addition, during the upsampling process, in response to obtaining the compression parameters associated with the eye movement signal of the user and the virtual rendering image to be processed, the composite compression unit (i.e. the sixth software) can also determine the upsampling magnification of each attention zone containing/near the gaze point position based on the updated compression parameters of the compression model. Afterwards, the composite compression unit (i.e. the sixth software) can retrieve the processing parameters for upsampling operations from the corresponding memory based on the coordinates of each pixel in each partition, and obtain the pixel cache data required for upsampling processing from the corresponding first memory. Herein, the pixel cache data includes but not limited to the cache data of at least one nearby pixel in the current frame, as well as the cache data of these nearby pixels in at least one historical frame before them. Afterwards, the composite compression unit (i.e. the sixth software) can sequentially input the obtained processing parameters and pixel cache data of each pixel into one or more of the weighted summation circuit, the mean calculation circuit, the filtering circuit, and the mapping circuit for pixel position relationship mentioned above, and perform the weighted sum, the mean calculation, the filtering, and/or the pixel position mapping hardening calculation on the pixel cache data to obtain a second hardening calculation result based on super-resolution processing. Afterwards, the composite compression unit (i.e. the sixth software) can summarize the second hardening calculation result and the first hardening calculation result mentioned above, and perform software operations such as data arrangement and assignment to obtain an equivalent resolution of 40 pixels per degree for 4K display in attention partition containing or near the gaze point position, and compress the re compressed image by downsampling at least one non attention partition far from the gaze point position. Thus, the disclosure can further enhance the equivalent resolution and real-time performance of XR display devices based on limited software and hardware resources.

In summary, compared to the existing technology of using hardware modules to implement the display compensation correction on the screen side display driver chip (DDIC) and software to implement the optical compensation on the graphics processor (GPU), the disclosure combines the eye movement signal and the motion perception information of the user in the display pipeline of the image processor 40 for the optical correction and the display compensation correction, and improves data storage, processing, and transmission efficiency by setting and reusing hardware image processing units, thereby enhancing the image display quality of XR display devices based on limited software and hardware resources. In addition, the disclosure also targets combination of Micro OLED display devices and pancake lens optical devices for XR display devices, as well as combination of LCD displays and pancake lens optical devices for 0D/1D/2D backlight modules, introducing various compensation algorithms such as the distortion removal, the uniformity correction, the color separation removal, and/or the color accuracy compensation correction, providing a convenient solution for new generation of VR head mounted display devices with Micro OLED+pancake lens and LCD+pancake lens as display optical solutions.

In addition, after obtaining the corrected image that has undergone the optical correction and the display compensation correction through the coprocessor 40, the coprocessor 40 can also transmit the corrected image to the display terminal 50 for high quality display of augmented reality images.

Those skilled in the art can understand that the system architecture of the extended reality display device using coprocessor 40 described above is only a non-limiting embodiment provided by the disclosure, aiming to clearly demonstrate the main concept of the disclosure and provide a specific solution for public implementation, rather than limiting the scope of protection of the disclosure.

Optionally, in other embodiments, the image processor provided in the first aspect of the disclosure can also be integrated into the main processor units such as the central processing unit (CPU) and the graphics processing unit (GPU) of the extended reality display device provided in the fourth aspect of the disclosure in the form of software programs and hardware units to achieve the same technical effects, and will not be repeated here.

Although the above methods are illustrated and described as a series of actions in order to simplify the explanation, it should be understood and appreciated that these methods are not limited by the order of actions, because according to one or more embodiments, some actions can occur in different order and/or concurrently with other actions from the illustrations and descriptions herein or not illustrated and described herein, but can be understood by those skilled in the art.

Those skilled in the art will understand that information, signals and data can be represented using any of a variety of different technologies and techniques. For example, the data, instructions, commands, information, signals, bits, symbols and chips cited throughout the above description may be represented by voltage, current, electromagnetic waves, magnetic fields or magnetic particles, optical fields or optical particles, or any combination thereof.

Those skilled in the art will further appreciate that various illustrative logic blocks, modules, circuits and algorithm steps described in combination with the embodiments disclosed herein can be implemented as electronic hardware, computer software or a combination of both. In order to clearly explain the interchangeability of hardware and software, various illustrative components, blocks, modules, circuits and steps are generally described above in the form of their functionality. Whether such functionality is implemented as hardware or software depends on the specific application and design constraints imposed on the overall system. Technicians can implement the described functionality in different ways for each specific application, but such implementation decisions should not be interpreted as leading to departure from the scope of the invention.

The various illustrative logic modules and circuits described in connection with the embodiments disclosed herein can be realized or executed by general-purpose processors, digital signal processors (DSPs), application specific integrated circuits (ASICs), field programmable gate arrays (FPGAs) or other programmable logic devices, discrete gate or transistor logic, discrete hardware components or any combination thereof designed to perform the functions described herein. The general processor can be a microprocessor, but in the alternative, the processor can be any conventional processor, controller, microcontroller or state machine. The processor can also be implemented as a combination of computing devices, such as a combination of DSP and microprocessors, a plurality of microprocessors, one or more microprocessors cooperating with the DSP core or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor so that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

In one or more exemplary embodiments, the functions described may be implemented in hardware, software, firmware, or any combination thereof. If implemented in software as a computer program product, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above should also be included within the scope of computer-readable media.

The previous description of the disclosure is provided to enable any person skilled in the art to make or use the disclosure. Various modifications to the disclosure will be apparent to those skilled in the art, and the universal principles defined herein can be applied to other variants without departing from the spirit or scope of the disclosure. Therefore, this disclosure is not intended to be limited to the examples and designs described herein, but should be granted the widest scope consistent with the principles and novel features disclosed herein.

## Claims

1. An image processor, comprising a display pipeline, wherein the display pipeline integrates a software processing unit and at least one hardware image processing unit, and is configured to:
obtaining an eye movement signal and motion perception information of a user, and obtaining a virtual rendering image to be processed;
using a first software configured in the software processing unit and the at least one hardware image processing unit to perform optical correction on the virtual rendering image, according to the eye movement signal and the motion perception information; and
using a second software configured in the software processing unit and the at least one hardware image processing unit to perform display compensation correction on the virtual rendering image, according to the eye movement signal and the motion perception information.

2. The image processor according to claim 1, wherein the at least one hardware image processing unit comprises a first memory, the first memory is used to store pixel data at multiple positions of a current frame and/or pixel data at multiple positions of at least one historical frame, steps to perform the optical correction and/or the display compensation correction on the virtual rendering image comprise:
obtaining the pixel data at multiple positions of the current frame and/or the pixel data at multiple positions of the at least one historical frame from the first memory; and
using the first software to perform the optical correction on the virtual rendering image, and/or using the second software to perform the display compensation correction on the virtual rendering image, according to the eye movement signal, the motion perception information, and the pixel data at multiple positions of the current frame and/or the pixel data at multiple positions of the at least one historical frame.

3. The image processor according to claim 2, wherein at least one hardware image processing unit further comprises at least one hardening calculation circuit, and steps to perform the optical correction and/or the display compensation correction on the virtual rendering image further comprise:
using the first software and the at least one hardening calculation circuit to perform the optical correction on the virtual rendering image, according to the eye movement signal, the motion perception information, and the pixel data at multiple positions of the current frame and/or the pixel data at multiple positions of the at least one historical frame; and/or
using the second software and the at least one hardening calculation circuit to perform the display compensation correction on the virtual rendering image, according to the eye movement signal, the motion perception information, and the pixel data at multiple positions of the current frame and/or the pixel data at multiple positions of the at least one historical frame.

4. The image processor according to claim 3, wherein the step of using the second software and the at least one hardening calculation circuit to perform the display compensation correction on the virtual rendering image, according to the eye movement signal, the motion perception information, and the pixel data at multiple positions of the current frame and/or the pixel data at multiple positions of the at least one historical frame comprises:
determining a target pixel point according to the eye movement signal and the motion perception information;
obtaining raw data of the target pixel point and at least one related pixel point from the first memory;
using the at least one hardening calculation circuit to perform hardening calculation on the raw data of the target pixel point and the at least one related pixel point; and
using the second software to perform the display compensation correction, including distortion correction, uniformity correction, color separation removal and/or color accuracy compensation, on the virtual rendering image, according to a result of the hardening calculation.

5. The image processor according to claim 3, wherein the at least one hardware image processing unit further comprises a second memory, the second memory is used to store calibration data of an optical module, a display panel and/or a camera, wherein
steps to perform the optical correction on the virtual rendering image further comprises: obtaining the calibration data from the second memory, and using the first software and at the least one hardening calculation circuit to perform lens optical correction on the virtual rendering image according to the calibration data, and/or
steps to perform the display compensation correction on the virtual rendering image comprises: obtaining the calibration data from the second memory, and using the second software and the at least one hardening calculation circuit to perform screen display compensation correction on the virtual rendering image according to the calibration data.

6. The image processor according to claim 1, wherein steps to perform the display compensation correction on the virtual rendering image comprise:
obtaining a real scene image to be processed;
using a third software configured in the software processing unit and the at least one hardware image processing unit, to perform layer mixing on the virtual rendering image that has undergone the optical correction and the real scene image, according to the eye movement signal and the motion perception information, to obtain a mixed reality image; and
using the second software and the at least one hardware image processing unit to perform the display compensation correction on the mixed reality image, according to the eye movement signal and the motion perception information.

7. The image processor according to claim 6, wherein the step of using a third software configured in the software processing unit and the at least one hardware image processing unit, to perform layer mixing on the virtual rendering image that has undergone the optical correction and the real scene image, according to the eye movement signal and the motion perception information, to obtain a mixed reality image comprises:
obtaining interaction information between the real scene image and the virtual rendering image;
using the third software and the at least one hardware image processing unit to perform the layer mixing on the virtual rendering image that has undergone the optical correction and the real scene image, according to the eye movement signal, the motion perception information and the interaction information.

8. The image processor according to claim 1 or 6, wherein the display pipeline is further configured to:
using a fourth software configured in the software processing unit and the at least one hardware image processing unit, to perform color enhancement on the virtual rendering image that has undergone the optical correction, or the mixed reality image, according to the eye movement signal and the motion perception information, to obtain a color enhanced image; and
using the second software and the at least one hardware image processing unit to perform the display compensation correction on the color enhanced image, according to the eye movement signal and the motion perception information.

9. The image processor according to claim 1 or 2, wherein the at least one hardware image processing unit further comprises a hardening calculation circuit, including at least one of a weighted sum circuit, a mean calculation circuit, a filtering circuit and a mapping circuit for pixel position relationship, and the display pipeline is further configured to:
using a fifth software configured in the software processing unit and the at least one hardware image processing unit, to perform spatial distortion correction on the virtual rendering image, according to the eye movement signal; and/or
using a sixth software configured in the software processing unit and the at least one hardware image processing unit to perform composite compression processing on the virtual rendering image, according to the eye movement signal.

10. An image processing method, comprising following steps:
obtaining an eye movement signal and motion perception information of a user, and obtaining a virtual rendering image to be processed;
using a first software configured in a software processing unit and at least one hardware image processing unit to perform optical correction on the virtual rendering image, according to the eye movement signal and the motion perception information; and
using a second software configured in the software processing unit and the at least one hardware image processing unit to perform display compensation correction on the virtual rendering image, according to the eye movement signal and the motion perception information.

11. A computer-readable storage medium, storing a computer instruction thereon, wherein when the computer instruction is executed by a processor, the image processing method according to claim 10 is implemented.

12. An extended reality display device, comprising:
an eye tracker, used to collect an eye movement signal of a user;
a motion sensor, used to collect motion perception information of the user;
a main processor, used to output a virtual rendering image to be processed;
an image processor according to anyone of claims 1 to 10, wherein the image processor is respectively connected to the eye tracker, the motion sensor and the main processor to obtain the eye movement signal, the motion perception information and the virtual rendering image; and
a display terminal, connected to the image processor to obtain and display a corrected image that has undergone optical correction and display compensation correction performed by the image processor.

13. The extended reality display device according to claim 12, further comprising a camera, wherein the image processor is further connected to the camera, and configured to:
obtaining a real scene image to be processed through the camera;
using a software processing unit and at least one hardware image processing unit configured in the image processor, to perform layer mixing on the virtual rendering image that has undergone the optical correction and the real scene image, according to the eye movement signal and the motion perception information, to obtain a mixed reality image; and
using the software processing unit and the at least one hardware image processing unit to perform display compensation correction on the mixed reality image, according to the eye movement signal and the motion perception information.
